(19) Europäisches Patentamt
European Patent Office
Office européen des brevets

(11) **EP 3 002 860 B1**

(12) **EUROPEAN PATENT SPECIFICATION**

(45) Date of publication and mention
of the grant of the patent:
**24.06.2020 Bulletin 2020/26**

(51) Int Cl.:
**H02M 3/156** *(2006.01)*   **H02M 3/158** *(2006.01)*
**G05F 1/00** *(2006.01)*   **H02M 1/00** *(2006.01)*

(21) Application number: **15002058.4**

(22) Date of filing: **09.07.2015**

(54) **PEAK-BUCK PEAK-BOOST CURRENT-MODE CONTROL FOR SWITCHED STEP-UP STEP-DOWN REGULATORS**

PEAK-BUCK-PEAK-BOOST-CURRENT-MODE-STEUERUNG FÜR GESCHALTETE AUFWÄRTS-ABWÄRTS-REGLER

COMMANDE DE MODE COURANT «PEAK-BOOST PEAK-BUCK» POUR RÉGULATEURS ABAISSEURS ÉLÉVATEURS COMMUTÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2014 US 201462088433 P**
**17.03.2015 US 201514660739**
**24.09.2014 US 201462054587 P**
**02.04.2015 US 201514677794**

(43) Date of publication of application:
**06.04.2016 Bulletin 2016/14**

(73) Proprietor: **Linear Technology Corporation**
**Milpitas, CA 95035-7417 (US)**

(72) Inventors:
• **Chen, Min**
**Milpitas, CA 95035 (US)**
• **Legates, Bryan Avery**
**Los Altos, CA 94024 (US)**

(74) Representative: **Müller-Boré & Partner**
**Patentanwälte PartG mbB**
**Friedenheimer Brücke 21**
**80639 München (DE)**

(56) References cited:
**EP-A2- 1 689 070      US-A1- 2006 284 606**
**US-A1- 2012 176 824      US-A1- 2014 084 883**
**US-A1- 2014 217 996      US-A1- 2014 354 250**

EP 3 002 860 B1

**Description**

BACKGROUND OF THE INVENTION

1. Field of the Invention

The present invention relates to switched step-up step-down regulators, and more particularly, to the control of such switched step-up step-down regulators using a current-mode control scheme.

2. Discussion of the Related Art

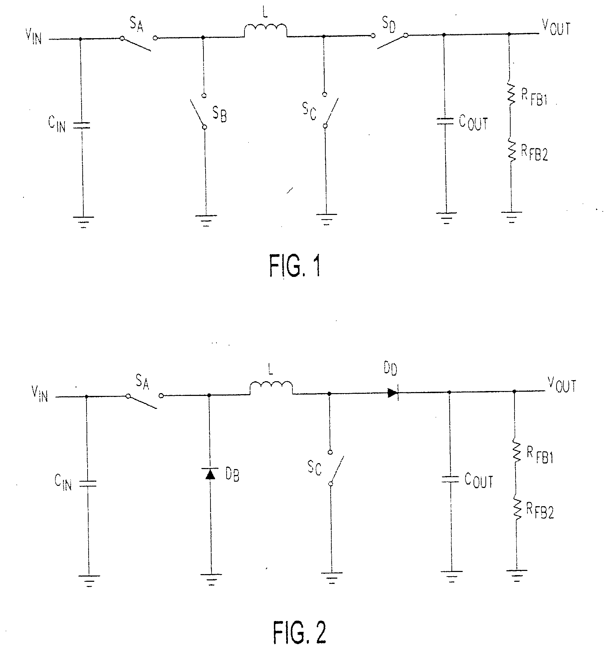

Step up-step down or buck-boost switching regulators handle input voltages that can be above, below, or equal to the output voltage. Figures 1 and 2 are schematic diagrams which show a synchronous four-switch buck-boost regulator and a non-synchronous two-switch buck-boost regulator, respectively. In each of the buck-boost regulators of Figures 1 and 2, the output voltage is regulated by sequentially activating or deactivating switches $S_A$, $S_B$, Sc and $S_D$. For example, three types of control schemes may be applied to these buck-boost regulators: (a) a hysteretic mode control scheme, disclosed in U.S. Patent 6,348,779 ("Sluijs"); (b) a voltage mode control scheme, disclosed in U.S. Patent 6,087,816 ("Volk"), U.S. Patent 6,166,527 ("Dwelley") and U.S. Patent 7,116,085 ("Ikezawa"); and (c) a current mode control scheme, disclosed in U.S. Patent 7,256,570 ("Zhou"), U.S. Patent 7,298,119 ("Amram Summit"), U.S. Patent 7,394,231 ("Flatness"), and U.S. Patent Application Publication 2011/0279098 ("Ren").

Hysteretic mode control schemes, e.g., those disclosed in Sluijs, typically switch among different operating states based on monitoring an output voltage using a window comparator. Disadvantages of a hysteretic mode control scheme include: the varying switching frequency is load-dependent, high output voltage ripples, and high noise mode transition.

Voltage mode control schemes, e.g., those disclosed in Volk, Dwelley and Ikezawa, are widely used in commercial buck-boost regulators. Voltage mode control schemes offer fixed switching frequency, low output voltage ripples, and low noise mode transition. However, the voltage mode control schemes typically run in forced continuous conduction mode, in which the inductor current can flow from the output terminal to the input terminal. The forced continuous conduction mode operation is not suitable for some applications (e.g., a battery charger application) that do not allow reverse currents. For such applications, a pulse-skip or burst discontinuous conduction mode operation handles the reverse current, when present. However, mode transitions in these control schemes generate large output transient ripples in the output load. Other disadvantages of the voltage mode control schemes include difficulty in compensating for a wide $V_{IN}$ range and no paralleling output capability.

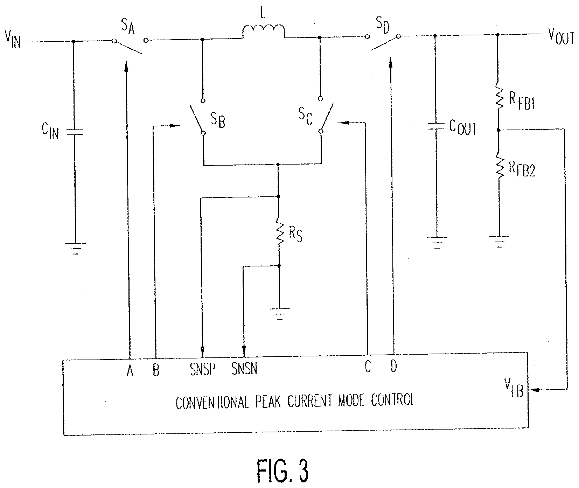

The current mode control schemes, e.g., those disclosed in Zhou, Amram Summit, Flatness and Ren, allow easy compensation and parallel outputs. Figure 3 illustrates a conventional peak current mode control scheme as applied to a synchronous four-switch buck-boost regulator (e.g., the synchronous four-switch buck-boost regulator of Figure 1). In the peak current mode scheme of Figure 3, switches $S_A$ and Sc are activated at the beginning of every clock pulse, allowing the inductor current of inductor L to be sensed by a comparator receiving a voltage across resistor Rs. When the comparator output voltage switches polarity, switches $S_A$ and Sc are deactivated and switches $S_B$ and $S_D$ are activated until the next clock pulse. This peak current mode scheme does not have a mode transition. However, the disadvantages of the current mode control scheme include high inductor current ripples and low power efficiency.

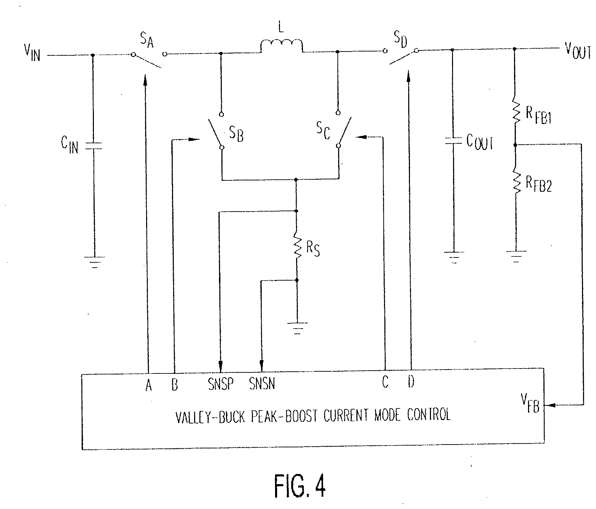

Figure 4 illustrates another current mode control scheme - the valley-buck peak-boost current mode scheme. The valley-buck peak-boost control scheme achieves low inductor current ripples, low output voltage ripples, and high power efficiency. Under the valley-buck peaK-boost control scheme, based on the inductor current sensed in ground sensing Rs resistor, the regulator runs in a valley current mode control scheme for a step-down operation and a peak current mode control scheme for a step-up operation. The valley-buck peak-boost control scheme is advantageous for operating in a continuous conduction mode because of its symmetry. However, without a reverse current detection capability under boost operations (when switches SA and $S_D$ are activated), the pulse-skip or burst mode discontinuous conduction operations are problematic. In addition, the valley current mode control scheme during step-down operations may present a current-runaway condition, as no peak current limit is enforced.

EP 1689070 A2 describes a switched regulator circuit which provides step-up and step-down operation in which the level of the input voltage can be greater, equal to, or less than a preset controlled output voltage.

US 2014 084883 A1 describes a windowless H-bridge buck-boost switching converter which includes a regulation circuit, a comparison circuit and logic circuitry.

US 2012 176824 A1 describes a digital control circuit for use with a switch-mode power converter that receives an input signal at a first input node and a control signal at a second input node, and that provides an output signal at a first output node and a current signal at a second output node.

US 2014 354250 A1 describes a controller used in a buck-boost converter which includes a clock generator, an error amplifying circuit, a comparing circuit, a proportional sampling circuit, a logic circuit, a pulse width increasing circuit and first and second driving circuits.

## SUMMARY

According to one embodiment of the present invention, a peak-buck peak-boost current mode control scheme is applied to a synchronous four-switch buck-boost regulator or a non-synchronous two-switch buck-boost regulator. Such a peak-buck peak-boost current, is capable of handling a reverse current, while achieving the benefits of low inductor current ripples, low output voltage ripples, and high power efficiency.

The control scheme of the present invention is applicable to both continuous conduction and discontinuous conduction operations, including pulse skip discontinuous conduction mode and burst mode discontinuous conduction mode operations. The peak-buck peak-boost current mode control scheme of the present invention may be applied to synchronous two-switch buck regulators, synchronous two-switch boost regulators, non-synchronous single-switch buck regulators and non-synchronous single-switch boost regulators.

According to one embodiment of the present invention, a peak-buck peak-boost control circuit for a voltage regulator may include (i) a mode selection circuit generating control signals representing (a) a first control state in which the input voltage is greater than the output voltage by at least a predetermined value; (b) a second control state in which the input voltage is greater than the output voltage less than or equal to the predetermined value; (c) a third control state in which the output voltage is greater than the input voltage by less than or equal to a second predetermined value; (d) a fourth control state in which the output voltage is greater than the input voltage by at least the predetermined value; and (ii) switch control signal generation circuit for generating control signals for operating switches in the voltage regulator, such that the voltage regulator is configured as (a) the buck regulator in the first control state, (b) a buck-boost regulator in the second and third control states, and (c) a boost regulator in the fourth control state.

The mode selection circuit may incorporate hysteresis for transitioning between the first and second control states, or for transitioning between the third and fourth control states. The output voltage may be provided as a scaled feedback signal. The voltage regulator may include an inductor and the peak-buck and peak-boost control scheme may use a ramping voltage signal to determine a peak value in a current flowing in the inductor. The peak value may be determined from the ramping voltage and an error signal derived from the output voltage. The occurrence of the peak value may be used to control switches in an output side of the voltage regulator. The error signal may be an amplified difference between a reference voltage and the output voltage. A compensation circuit receiving the error signal may be provided for ensuring loop stability in the voltage regulator.

The peak-buck peak-boost control scheme of the present invention may also determine an occurrence of the peak current using the ramping voltage, an offset voltage and an error signal derived from the output voltage. The offset voltage may be derived from a difference in voltage at two time points of the ramping voltage. The two time points are specific time points within a switching cycle of the peak-buck peak-boost control circuit. The occurrence of the peak value may be used to control switches in an input side of the voltage regulator.

The present invention is better understood upon consideration of the detailed description below in conjunction with the accompanying drawings.

## BRIEF DESCRIPTION OF THE DRAWINGS

Figure 1 is a schematic diagram which shows a synchronous four-switch buck-boost regulator.

Figure 2 is a schematic diagram which shows a non-synchronous two-switch buck-boost regulator.

Figure 3 illustrates a conventional peak current mode control scheme as applied to a synchronous four-switch buck-boost regulator (e.g., the synchronous four-switch buck-boost regulator of Figure 1).

Figure 4 illustrates a valley-buck peak-boost current mode control scheme as applied to a synchronous four-switch buck-boost regulator (e.g., the synchronous four-switch buck-boost regulator of Figure 1).

Figure 5 shows synchronous four-switch buck-boost regulator 500 being controlled under a peak-buck peak-boost current mode control scheme, according to one embodiment of the present invention.

Figure 6 shows non-synchronous two-switch buck-boost regulator 600 being controlled under a peak-buck peak-boost current mode control scheme, according to one embodiment of the present invention.

Figure 7 is a block diagram showing schematically control circuit 700, which implements a peak-buck peak-boost current mode control scheme, in accordance with one embodiment of the present invention.

Figure 8(i) illustrates operating mode determination in selection circuit 720 and Figures 8(ii)-8(iv) show the logic values of control signals ON_BUK, ON BST, PK_BUK and PK_BST, respectively, relative to the ratio $\frac{V_{IN}}{V_{OUT}}$, according to one embodiment of the present invention.

Figure 9 shows waveforms of clock signals, CLK_A, CLK_B, and CLK_C, slope compensation signal $V_{SLP}$ and slope compensation offset signal $V_{OS}$, according to one embodiment of the present invention.

Figure 10 shows flow chart 1000 illustrating the operations of buck logic circuit 721 and boost logic circuit 722 of Figure 7 under a continuous conduction mode, in accordance with one embodiment of the present invention.

Figure 11 shows flow chart 1100 illustrating the operations of buck logic circuit 721 and boost logic circuit 722 of Figure 7 under a discontinuous conduction mode, in accordance with one embodiment of the present invention.

Figure 12 shows the waveforms of control signals CLK_A, CLK_B, CLK_C, A, B, C and D and current $I_L$ in inductor L, under the operating condition in which input voltage $V_{IN}$ is much higher than output voltage $V_{OUT}$, in accordance one embodiment of the present invention.

Figure 13 shows the waveforms of control signals CLK_A, CLK_B, CLK_C, A, B, C and D and current $I_L$ in inductor L, under the operating condition in which input voltage $V_{IN}$ is slightly higher than output voltage $V_{OUT}$, in accordance one embodiment of the present invention.

Figure 14 shows the waveforms of control signals CLK_A, CLK_B, CLK_C, A, B, C and D and current $I_L$ in inductor L, under the operating condition in which input voltage $V_{IN}$ is much lower than output voltage $V_{OUT}$, in accordance one embodiment of the present invention.

Figure 15 shows the waveforms of control signals CLK_A, CLK_B, CLK_C, A, B, C and D and current $I_L$ in inductor L, under the operating condition in which input voltage $V_{IN}$ is slightly lower than output voltage $V_{OUT}$, in accordance one embodiment of the present invention.

Figure 16 shows the waveforms of control signals CLK_A, CLK_B, CLK_C, A, B, C and D and current $I_L$ in inductor L, under the operating condition in which input voltage $V_{IN}$ is equal output voltage $V_{OUT}$ in peak-buck buck-boost mode, in accordance one embodiment of the present invention.

Figure 17 shows the waveforms of control signals CLK_A, CLK_B, CLK_C, A, B, C and D and current $I_L$ in inductor L, under the operating condition in which input voltage $V_{IN}$ is equal output voltage $V_{OUT}$ in peak-boost buck-boost mode, in accordance one embodiment of the present invention.

To facilitate cross-referencing among the figures, like elements are assigned like reference numerals.

DETAILED DESCRIPTION OF THE PREFERRED EMBODIMENTS

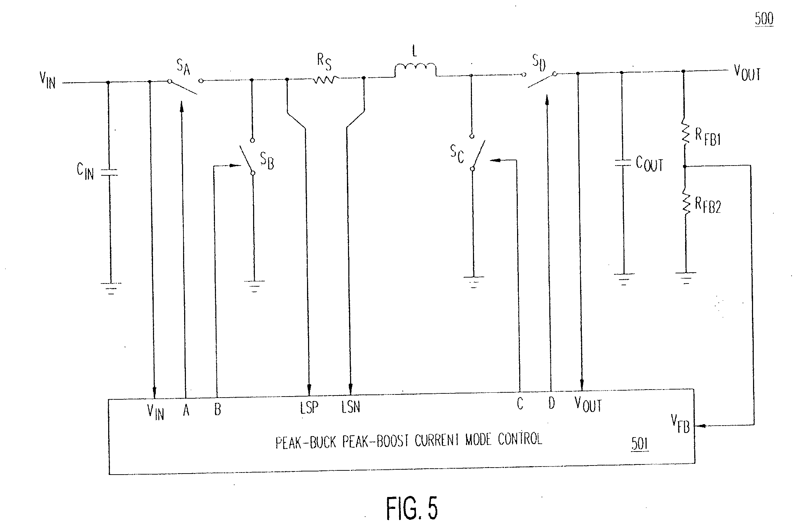

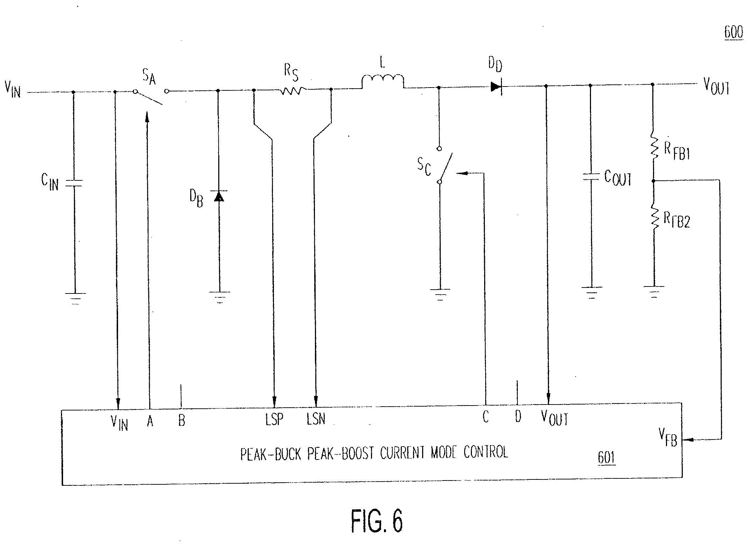

Figures 5 and 6 show control circuits 501 and 601 controlling synchronous four-switch buck-boost regulator 500 and non-synchronous two-switch buck-boost regulator 600, respectively, under a peak-buck peak-boost current mode control scheme, according to one embodiment of the present invention. As shown in Figures 5 and 6, control circuits 501 and 601 each receive its respective input voltage $V_{IN}$ and its respective output voltage $V_{OUT}$. Although Figures 5 and 6 each show direct sensing of voltages $V_{IN}$ and $V_{OUT}$, other methods may also be used, such as indirect sensing of $V_{IN}$ and $V_{OUT}$ and sensing scaled versions of $V_{IN}$ and $V_{OUT}$. Further, Figures 5 and 6 show buck-boost regulators 500 and 600 sensing the current in inductor L through sensing a voltage drop across single resistor Rs. However, other current sensing methods may also be used, such as direct-current resistance (DCR) sensing, FET drain-source ($V_{DS}$) sensing, or by the use of two resistors (i.e., one resistor provided between switch $S_A$ and the terminal receiving voltage $V_{IN}$, and the other resistor provided between switch SB and the ground reference.

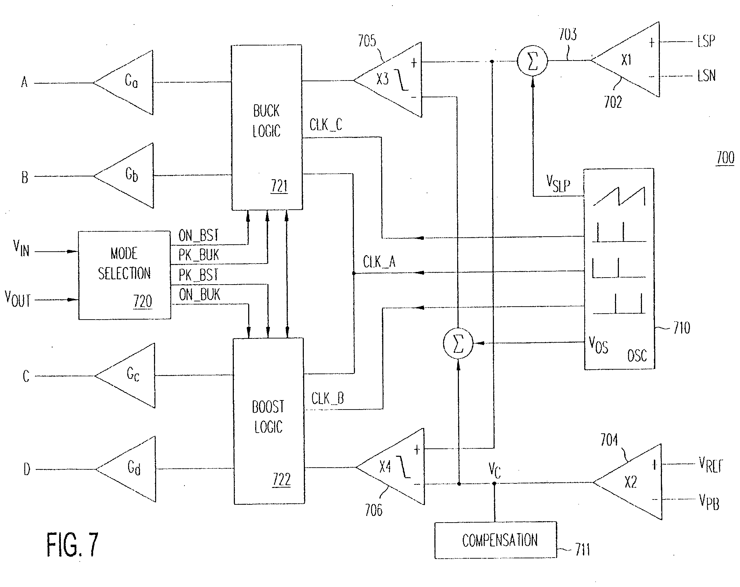

Figure 7 is a block diagram showing schematically control circuit 700, which implements a peak-buck peak-boost current mode control scheme, in accordance with one embodiment of the present invention. Control circuits 501 and 601 of Figures 5 and 6 may each be implemented by control circuit 700. Control circuit 700 provides output signals A, B, C and D, for controlling switches $S_A$, $S_B$, $S_C$ and $S_D$ of a synchronous four-switch buck-boost regulator, respectively. In the case of controlling a non-synchronous two-switch buck-boost regulator, such as shown in Figure 6, signals B and D may be simply ignored. As shown in Figure 7, control circuit 700 receives input signals $V_{IN}$, $V_{OUT}$, LSP, LSN, and $V_{FB}$. Signals LSP and LSN provide the voltage drop across sensing resistor $R_S$ and signal $V_{FB}$ is a scaled voltage representing output voltage $V_{OUT}$.

Control circuit 700 operates a regulator under one of four operating modes: (a) when input voltage $V_{IN}$ is much higher than output voltage $V_{OUT}$; (b) when input voltage $V_{IN}$ is much lower than output voltage $V_{OUT}$; (c) when input voltage $V_{IN}$ is slightly higher than output voltage $V_{OUT}$, and (d) when input voltage $V_{IN}$ is slightly lower than output voltage $V_{OUT}$. When input voltage $V_{IN}$ is much higher than output voltage $V_{OUT}$, the regulator is operated under a pure buck mode with peak-buck current mode control ("peak-buck buck mode"). When input voltage $V_{IN}$ is much lower than output voltage $V_{OUT}$, the regulator is operated under a pure boost mode with peak-boost current mode control ("peak-boost boost mode"). When input voltage $V_{IN}$ is slightly higher than output voltage $V_{OUT}$, the regulator is operated under a buck-boost mode with peak-buck current mode control ("peak-buck buck-boost mode"). When input voltage $V_{IN}$ is slightly lower than output voltage $V_{OUT}$, the regulator is operated under a buck-boost mode with peak-boost current mode control ("peak-boost buck-boost mode").

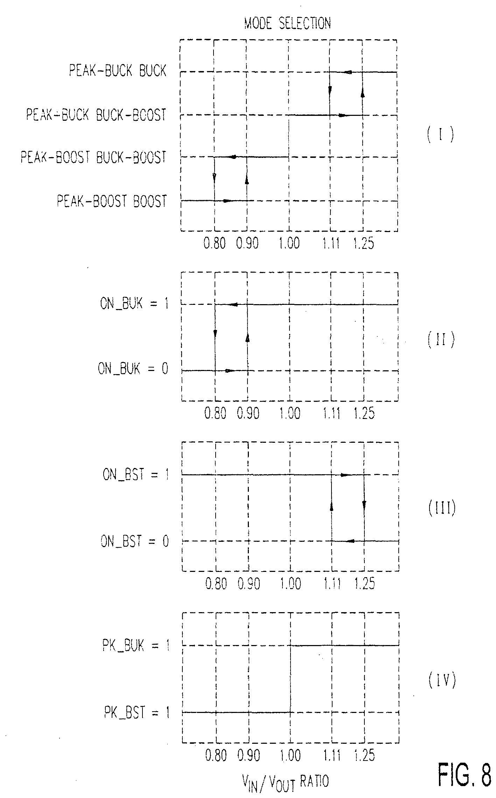

Based on the values of input signal $V_{IN}$ and output signal $V_{OUT}$, mode selection circuit 720 (Figure 7) determines which of the aforementioned four operative modes to operate the regulator. The selected operating mode is communicated to the remainder of control circuit 700 by the states of the control signals ON_BST, ON_BUK, PK_BUK and PK_BST which are generated by mode selection circuit 720. Figure 8(i) illustrates operating mode determination in selection circuit 720 and Figures 8(ii)-8(iv) show the logic values of control signals ON_BUK, ON_BST, PK_BUK and PK_BST, respectively, relative to the ratio $\frac{V_{IN}}{V_{OUT}}$, according to one embodiment of the present invention. Mode selection circuit 720 may include three comparators to generate control signals ON_BST, ON_BUK, PK_BUK and PK_BST, as control signals PK_BUK and PK_BST haVE complementary values. As shown in Figure 8(iv), when ratio $\frac{V_{IN}}{V_{OUT}}$ is greater than 1, control signal PK BUK is set to value '1' (and, correspondingly, control signal PK_BST is set to '0') and one of the two "peak-buck" current operating modes is activated. Conversely, when ratio $\frac{V_{IN}}{V_{OUT}}$ is less than 1, control signal PK_BST is set to value '1' (and, correspondingly, control signal PK_BUK is set to '0') and one of the two peak-boost current operating modes is activated. Control signal ON_BUK is set to '1' to indicate that a buck phase (i.e., during which both switches SB and $S_D$ are activated) is selected. Likewise, control signal ON_BST is set to '1' to indicate that a boost phase (i.e., during which both switches $S_A$ and Sc are activated) is selected. As shown in Figure 8, hysteresis is provided to avoid oscillation between mode transitions. For example, as shown in Figure 8(ii), control signal ON_BUK remains at value '0' until the increasing ratio $\frac{V_{IN}}{V_{OUT}}$ reaches 0.9. Conversely, control signal ON BUK remains at value '1' until the decreasing ratio $\frac{V_{IN}}{V_{OUT}}$ reaches 0.8. Similarly, as shown in Figure 8(iii), control signal ON_BST remains at value '1' until the increasing ratio $\frac{V_{IN}}{V_{OUT}}$ reaches 1.25. Conversely, control signal ON_BST remains at value '0' until the decreasing ratio $\frac{V_{IN}}{V_{OUT}}$ reaches 1.11. As a result, mode transitions between "peak-buck buck mode" and "peak buck buck-boost mode" and between "peak-boost buck-boost mode" and "peak-boost boost mode" follow the hystereses in control signals ON_BST and ON_BUK, respectively.

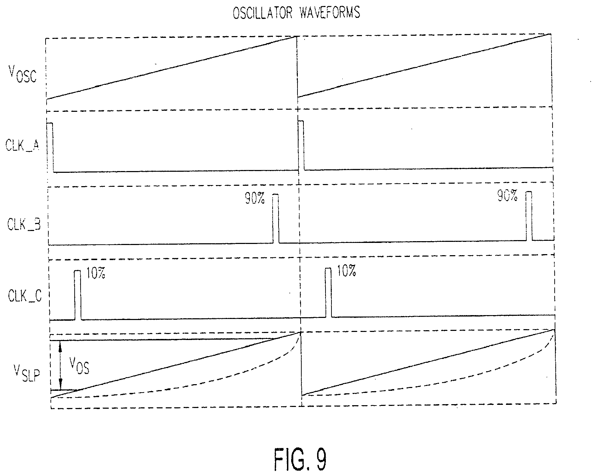

As shown in Figure 7, oscillator circuit 710 generates clock signals, CLK_A, CLK_B, and CLK_C, slope compensation signal $V_{SLP}$ and slope compensation offset signal Vos. Figure 9 shows waveforms of clock signals, CLK_A, CLK_B, and CLK_C, slope compensation signal $V_{SLP}$ and slope compensation offset signal $V_{OS}$, according to one embodiment of the present invention. As shown in Figure 9, the rising edge of clock signal CLK_A marks the beginning of a switching period. The rising edge of clock signal CLK_C marks a 10% switching period delay, while the rising edge of clock CLK_B marks a 90% switching period delay. Compensation signal $V_{SLP}$ may be provided either as a linear slope compensation (solid trace) or as a nonlinear slope compensation (dashed trace). In either case, slope compensation offset signal $V_{OS}$ is provided as a voltage difference between the values of slope compensation signal $V_{SLP}$ at the 10% switching period delay and at the 90% switching period delay.

In each of regulator circuits 500 and 600, current $I_L$ in inductor L is sensed through sense resistor Rs. As shown in Figure 7, amplifier 702 receives and amplifies (with a fixed gain) a differential signal represented by the difference between signals LSP and LSN to provide single-ended signal 703. Output voltage $V_{OUT}$ is sensed and scaled to provide feedback signal $V_{FB}$ by a voltage divider formed by resistors $R_{FBI}$ and $R_{FB2}$. Feedback signal $V_{FB}$ is provided to error amplifier 704, which generates an error signal $V_C$. Signal $V_C$ represents a voltage difference between reference signal $V_{REF}$ and feedback signal $V_{FB}$.

Compensation network 711 provides loop stability based on error signal $V_C$. The output signals from amplifier 702 and error amplifier 704, slope compensation signal $V_{SLP}$, and slope compensation offset signal $V_{OS}$ are provided to buck current comparator 705 and boost current comparator 706. According to the operating mode set by mode selection circuit 720, buck logic circuit 721 and boost logic circuit 722 provide control signals A, B, C and D, which are used to the respective control switches $S_A$, $S_B$, Sc, and $S_D$ in circuits 500 and 600.

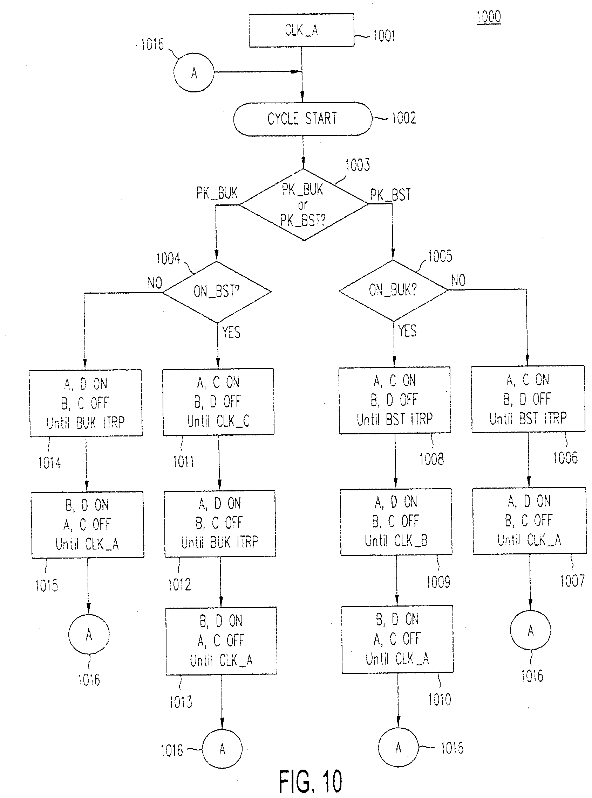

The control schemes of the present invention are applicable to continuous conduction mode and pulse-skip and burst discontinuous conduction modes. Figure 10 shows flow chart 1000 illustrating the operations of buck logic circuit 721 and boost logic circuit 722 of Figure 7 under a continuous conduction mode, in accordance with one embodiment of the present invention.

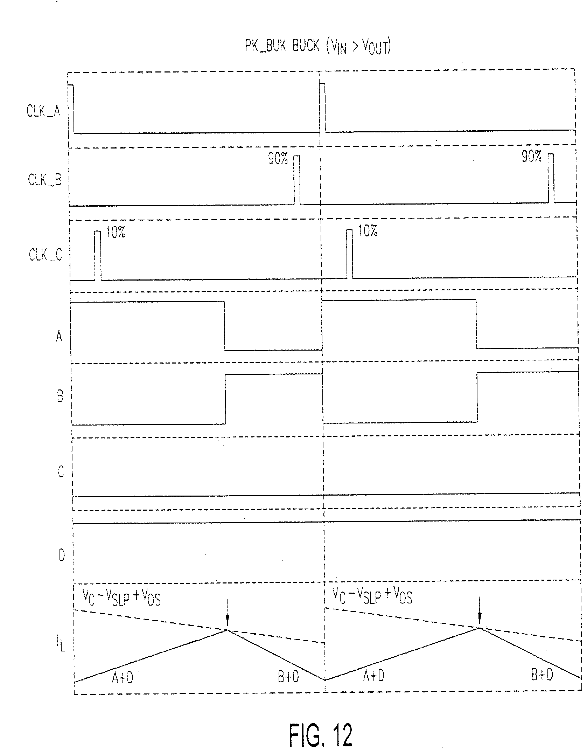

Figures 12-17 show the waveforms of control signals CLK_A, CLK_B, CLK_C, A, B, C and D and current $I_L$ in inductor L, under various operating conditions, in accordance with one embodiment of the present invention. When control switch A, B, C or D is activated, the corresponding switch $S_A$, $S_B$, $S_C$ and $S_D$ is conducting. In each of these figures, the shoot-through protection dead times between control signals A and B, and between control signals C and D (which would be understood to be present by those of ordinary skill in the art) are not shown so as to simplify the detailed description herein.

As shown in Figure 10, control signal CLK_A determines the timing of each cycle, which begins at the rising edge of control signal CLK_A (step 1002). Based on the determinations at steps 1003-1005, based on the logic values of control signals PK_BUK, PK_BST, ON_BST and ON_BUK control circuit 700 generates switch control signals A, B, C and D to operate switches $S_A$, $S_B$, Sc and $S_D$. As mentioned above, when input voltage $V_{IN}$ is much higher than output voltage VOUT (PK_BUK='1', ON_BUK='1', and ON_BST='0'), the regulator is operated under the peak-buck buck mode, according to steps 10014-1015. Figure 12 shows the waveforms of control signals CLK_A, CLK_B, CLK_C, A, B, C and D and current $I_L$ in inductor L. Under this mode, switch control signal C is deactivated and switch control signal D is activated throughout the switching cycle. Switch control signals A and B are alternatingly activated and deactivated according to peak-buck current mode control. Specifically, at step 1014, switch control signal A is activated, leading to ramping up of inductor current $I_L$ until the voltage difference between signals LSP and LSN (representing current $I_L$ in inductor L) reaches $V_C-V_{SLP}+V_{OS}$, at which time buck current comparator 705 transitions its output state. When that voltage threshold is reached, switch control signal A is deactivated and switch control signal B is activated (step 1015). This state is maintained until the beginning of the next switching cycle (step 1016).

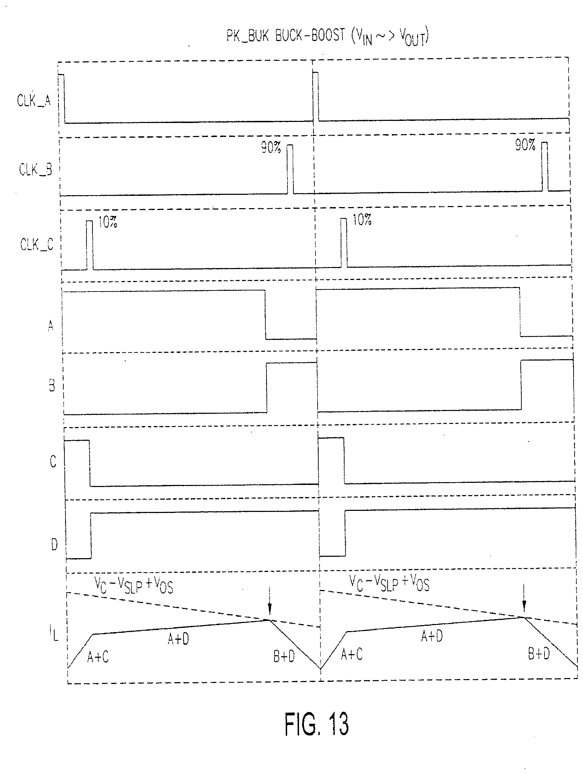

When input voltage $V_{IN}$ is slightly higher than output voltage $V_{OUT}$, the regulator is operated under peak-buck buck-boost mode (PK_BUK='1', ON_BUK='1', and ON_BST='1') according to steps 1011-1013. Figure 13 shows the waveforms of control signals CLK_A, CLK_B, CLK_C, A, B, C and D and current $I_L$ in inductor L, under peak-buck buck-boost mode. As shown in Figure 13, at the beginning of the cycle (step 1011), switch control signals A and C are activated, and switch control signals B and D are deactivated, to provide a fixed boost phase to inductor current $I_L$. At step 1012, at the rising edge of control signal CLK_C (at the beginning 10% of the switching cycle), switch control signal C is deactivated and switch control signal D is activated to allow a slower ramp in inductor current $I_L$ until the voltage difference between signals LSP and LSN (representing current $I_L$ in inductor L) reaches $V_C-V_{SLP}+V_{OS}$, at which time buck current comparator 705 transitions its output state. When buck current comparator 705 transitions its output state, switch control signal A is deactivated and switch control signal B is activated until the beginning of the next switching cycle (step 1013).

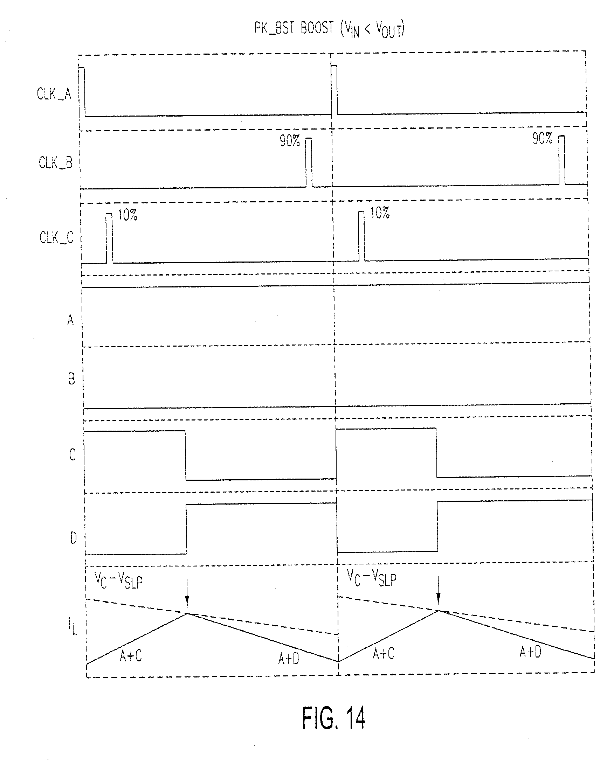

When input voltage $V_{IN}$ is much lower than output voltage $V_{OUT}$ (PK_BST='1', ON_BUK='0', and ON_BST='1'), the regulator is operated under the peak-boost boost mode, according to steps 1006-1007. Figure 14 shows the waveforms of control signals CLK_A, CLK_B, CLK_C, A, B, C and D and current $I_L$ in inductor L, under the peak-boost boost mode. As shown in Figure 14, switch control signal A is activated and switch control signal B is deactivated for the entire switching cycle. At steps 1006-1007, switch control signals C and D are alternatingly activated and deactivated according to peak-boost current mode control. At the beginning of the cycle, i.e., at the rising edge of clock signal CLK_A, switch control signal C is activated to allow inductor current $I_L$ to ramp up. When the voltage difference between signals LSP and LSN (representing inductor current IL) reaches $V_C-V_{SLP}$, boost current comparator 706 transitions its output state, switch control signal C is deactivated and switch control signal D is activated until the next switching cycle (step 1007).

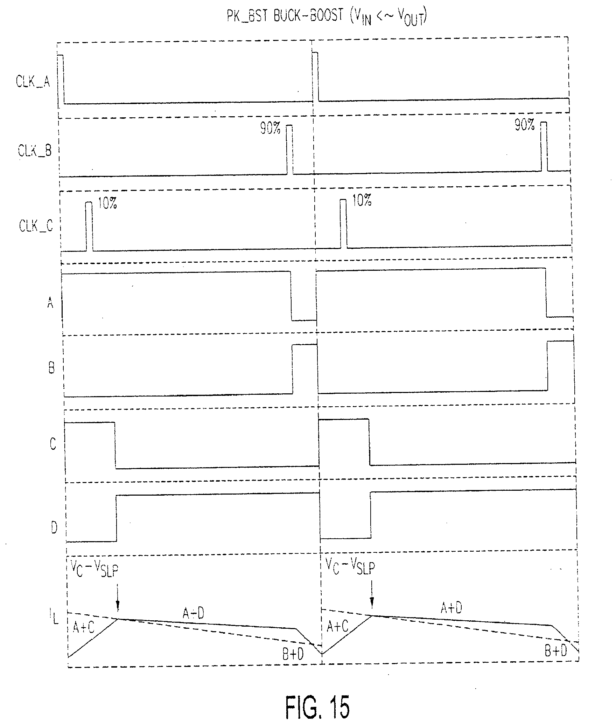

When input voltage $V_{IN}$ is slightly lower than output voltage $V_{OUT}$ (PK_BST='1', ON_BUK='1', and ON_BST='1'), the regulator is operated under a peak-boost buck-boost mode, according to steps 1008-1010. Figure 15 shows the waveforms of control signals CLK_A, CLK_B, CLK_C, A, B, C and D and current $I_L$ in inductor L, under the peak-boost buck-boost mode. As shown in Figure 15, switch control signal A is activated for the beginning 90% of the switching cycle (i.e., switch control signal A is activated at the rising edge of clock signal CLK_A and deactivated at the rising edge of clock signal CLK_B). At the beginning of the cycle (i.e., at the rising edge of clock signal CLK A), both switch control signals A and C are activated according to step 1008, so that inductor current $I_L$ ramps up. When the voltage difference between signals LSP and LSN (representing inductor current $I_L$) reaches $V_C-V_{SLP}$, boost current comparator 706 transitions its output state. At that time, according to step 1009, switch control signal C is deactivated and switch control signal D is activated. At the rising edge of clock signal CLK B, i.e., at 90% of the cycle, switch control signal A is deactivated and switch control signal B is activated until the next switching cycle (step 1010).

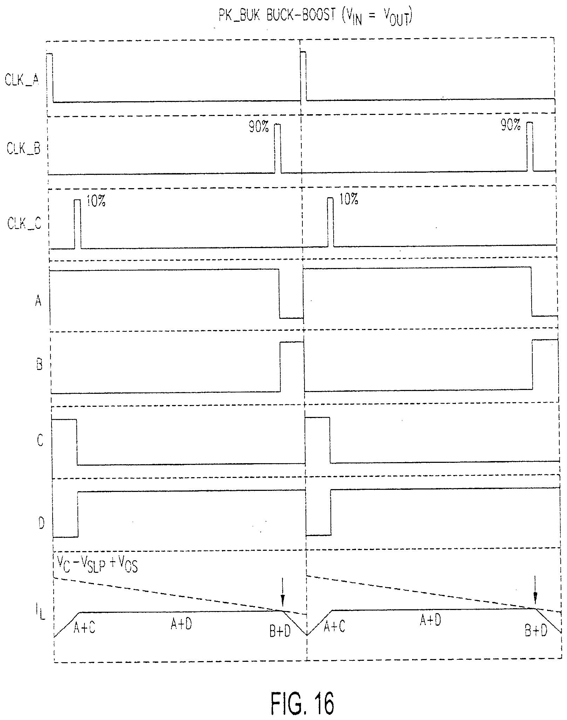

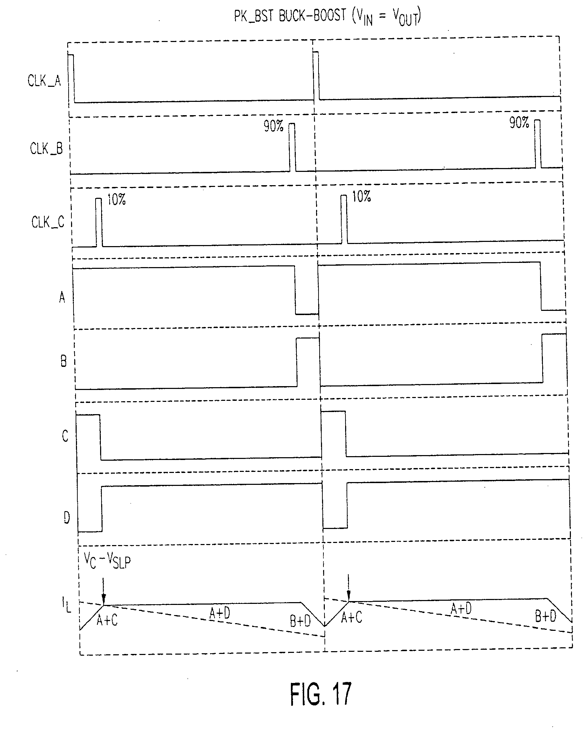

In either peak-buck buck-boost mode (i.e., the operating condition of Figure 13) or peak-boost buck-boost mode (i.e., the operating condition of Figure 15), $V_{IN}$ may become equal to output voltage $V_{OUT}$. In either case, inductor current $I_L$ is flat when both switch control signals A and D are activated. Figure 16 shows the waveforms of control signals CLK_A, CLK_B, CLK_C, A, B, C and D and current $I_L$ in inductor L, under the operating condition in which input voltage $V_{IN}$ is equal to output voltage $V_{OUT}$ in peak-buck buck-boost mode, in accordance one embodiment of the present invention. Figure 17 shows the waveforms of control signals CLK_A, CLK_B, CLK_C, A, B, C and D and current $I_L$ in inductor L, under the operating condition in which input voltage $V_{IN}$ is equal to output voltage $V_{OUT}$ in peak-boost buck-boost mode, in accordance one embodiment of the present invention. As buck current comparator 705 compares the voltage representing inductor current $I_L$ with the voltage sum of signals $V_C$ and $V_{OS}$, while boost current comparator 706 compares the voltage representing inductor current $I_L$ with of voltage of signal Vc, signal Vc is stable regardless whether control transitions from peak-buck current mode control to peak-boost current mode control, or in the opposite direction. Thus, a regulator of the present invention has low-noise control transitions.

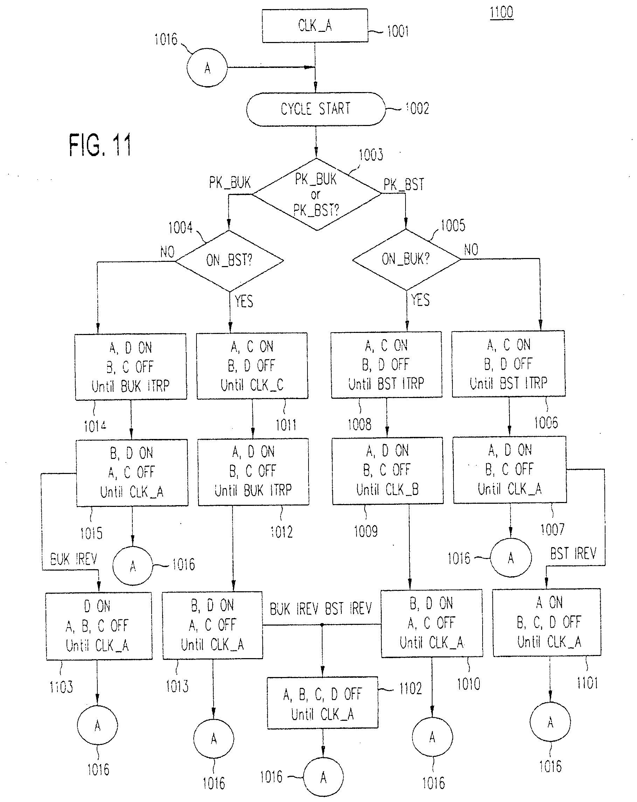

Figure 11 shows flow chart 1100 illustrating the operations of buck logic circuit 721 and boost logic circuit 722 of Figure 7 under a discontinuous conduction mode, in accordance with one embodiment of the present invention. According to Figure 11, if inductor current $I_L$ falls below zero ("reverse current"; i.e., current flowing from the output side to the input side), all switch control signals may be deactivated to open all four switches during the peak-buck buck-boost mode or the peak-boost buck-boost mode (step 1102). Alternatively, in peak-buck buck mode, switch control signal B may be deactivated to open switch B (step 1103). Similarly, in peak-boost boost mode, switch control signal D may be deactivated to open switch D (step 1101).

The above detailed description is provided to illustrate the specific embodiments of the present invention and is not intended to be limiting. Numerous variations and modifications within the scope of the present invention are possible. The present invention is set forth in the claims.

**Claims**

1. A peak-buck peak-boost control circuit (501, 601, 700) adapted to be placed in a voltage regulator (500, 600), the peak-buck peak-boost control circuit being adapted to select in which one of a peak-buck buck mode, a peak-buck buck-boost mode, a peak-boost buck-boost mode and a peak-boost boost mode of operation the voltage regulator should operate, the voltage regulator being adapted to receive an input voltage ($V_{IN}$) and being adapted to provide an output voltage ($V_{OUT}$), the peak-buck peak-boost control circuit comprising:

   a mode selection circuit (720) adapted to generate control signals (ON_BST, PK_BUK, PK_BST, ON_BUK) representing (a) a first control state in which the input voltage is greater than the output voltage by at least a first predetermined value; (b) a second control state in which the input voltage is greater than the output voltage and less than or equal to the first predetermined value; (c) a third control state in which the output voltage is greater than the input voltage and less than or equal to a second predetermined value; (d) a fourth control state in which the output voltage is greater than the input voltage by at least the second predetermined value; and
   a switch control signal generation circuit for generating control signals (A, B, C, D) for operating switches ($S_A$, $S_B$, $S_C$, $S_D$) in the voltage regulator, wherein the voltage regulator is configured to be operated in (a) the peak-buck buck mode by the first control state, (b) the peak-buck buck-boost mode by the second control state, (c) the peak-boost buck-boost mode by the third control state and (d) the peak-boost boost mode by the fourth control state;
**characterised in that** the peak-buck peak-boost control circuit is adapted to receive a first clock signal (CLK_A), a second clock signal (CLK_B) and a third clock signal (CLK_C), wherein the first clock signal marks the beginning of a switching period and the second and third clock signal mark respective predetermined switching period delays,
and wherein the peak-buck peak-boost control circuit is adapted to implement a peak current-mode control scheme for generating the control signals (A, B, C, D) for operating the switches ($S_A$, $S_B$, $S_C$, $S_D$) based on a configuration to

   (i) detect a peak in a current ($I_L$) of an inductor (L) in the voltage regulator when a voltage difference, representing the current of the inductor, reaches a variable voltage threshold; and to
   (ii) apply the timing of the first, second and third clock signals.

2. The peak-buck peak-boost control circuit (501, 601, 700) of claim 1,
   wherein the mode selection circuit (720) is adapted to apply hysteresis to a transition between the first and second control states, or to a transition between the third and fourth control states; and
   wherein the peak-buck peak-boost control circuit is adapted to provide the output voltage ($V_{OUT}$) as a scaled feedback signal ($V_{FB}$) for input to the peak-buck peak-boost control circuit.

3. The peak-buck peak-boost control circuit (501, 601, 700) of claim 2, wherein the switch control signal generation circuit includes a signal generator (710) that is adapted to provide a ramping voltage signal ($V_{SLP}$) and a current sense amplifier (702) that is adapted to determine a peak value in a current flowing in the inductor, and optionally
   wherein the ramping voltage signal comprises a segment which is linear in time; and
   wherein the peak-buck peak-boost control circuit is adapted to determine the current flowing in the inductor (L) from a voltage across a sense resistor (Rs) which is configured in series with the inductor.

4. The peak-buck peak-boost control circuit (501, 601, 700) of claim 3, wherein the switch control signal generation circuit comprises a first comparator (706) that is adapted to determine an occurrence of the peak value using the ramping voltage ($V_{SLP}$), the inductor current ($I_L$), and an error signal ($Vc$) derived from the output voltage ($V_{OUT}$), wherein the peak value is determined when the voltage difference representing the current of the inductor is equal to the difference of the error signal and the ramping voltage; and optionally wherein the first comparator is adapted to control switches ($S_C$, $S_D$) in an output side of the voltage regulator (500, 600).

5. The peak-buck peak-boost control circuit (501, 601, 700) of claim 4, further adapted, when in either the third control state or the fourth control state, in response to the occurrence of the peak value, the switch control signal generation circuit, to close a switch ($S_D$) connecting the inductor from an output terminal of the voltage regulator (500, 600) and to open a switch ($Sc$) connecting the inductor to a ground reference; and optionally wherein the peak-buck peak-boost control circuit is further adapted, in the third control state, at one of the predetermined switching period delays marked by the second or third clock signal (CLK_B, CLK_C), following the occurrence of the peak value, the switch control signal generation circuit to open a switch ($S_A$) connecting the inductor from an input terminal of the voltage regulator and to close a switch ($S_B$) connecting the inductor to a ground reference.

6. The peak-buck peak-boost control circuit (501, 601, 700) of claim 4 or 5, wherein the error signal ($Vc$) is an amplified difference between a reference voltage and the output voltage ($V_{OUT}$), and optionally the peak-buck peak-boost control circuit further comprises a compensation circuit (711) adapted to receive the error signal for providing loop stability in the voltage regulator (500, 600).

7. The peak-buck peak-boost control circuit (501, 601, 700) of claim 3, wherein the switch control signal generation circuit comprises a second comparator (705) that is adapted to determine an occurrence of the peak current using the ramping voltage ($V_{SLP}$), the inductor current ($I_L$), an offset voltage ($Vos$) and an error signal ($Vc$) derived from the output voltage ($V_{OUT}$), wherein the offset voltage is provided as a voltage difference between the ramping voltage at the predetermined switching period delay of the third clock signal (CLK_C) and the second clock signal (CLK_B) and wherein the peak value is determined when the voltage difference representing the current of the inductor is equal to the difference of the error signal and the ramping voltage plus the offset voltage; and optionally wherein the peak-buck peak-boost control circuit is adapted to derive the offset voltage from a difference in voltage at two time points of the ramping voltage, and wherein the two time points are specific time points within a switching cycle of the peak-buck peak-boost control circuit.

8. The peak-buck peak-boost control circuit (501, 601, 700) of claim 7, wherein the comparator (706) is adapted to control switches ($S_A$, $S_B$) in an input side of the voltage regulator (500, 600), and optionally wherein the peak-buck peak-boost control circuit is adapted, when in either the first control state or the second control state, in response to the occurrence of the peak value, the switch control signal generation circuit to open a switch ($S_A$) connecting the inductor from an input terminal of the voltage regulator and to close a switch ($S_B$) connecting the inductor to a ground reference, and optionally wherein the peak-buck peak-boost control circuit is adapted, in the second control state, at one of the predetermined switching period delays marked by the second or third clock signal (CLK_B, CLK_C), the switch control signal generation circuit to close a switch ($S_D$) connecting the inductor from an output terminal of the voltage regulator and to open a switch ($Sc$) connecting the inductor to a ground reference.

9. A method performed by a peak-buck peak-boost control circuit (501, 601, 700) adapted to be placed in a voltage regulator (500, 600), the peak-buck peak-boost control circuit being adapted to select in which one of a peak-buck buck mode, a peak-buck buck-boost mode, a peak-boost buck-boost mode and a peak-boost boost mode of operation the voltage regulator should operate, the voltage regulator being adapted to receive an input voltage ($V_{IN}$) and to provide an output voltage ($V_{OUT}$), the method for controlling the voltage regulator comprising:

receiving a first clock signal (CLK_A), a second clock signal (CLK_B) and a third clock signal (CLK_C) into the peak-buck peak-boost control circuit, wherein the first clock signal marks the beginning of a switching period and the second and third clock signal mark respective predetermined switching period delays; selecting a control state (ON_BST, PK_BUK, PK_BST, ON_BUK), wherein the selecting comprises determining (a) a first control state in which the input voltage is greater than the output voltage by at least a first predetermined value; (b) a second control state in which the input voltage is greater than the output voltage and less than or equal to the first predetermined value; (c) a third control state in which the output voltage is greater than the input voltage and less than or equal to a second predetermined value; (d) a fourth control state in which the output voltage is greater than the input voltage by at least the second predetermined value;

generating switch control signals (A, B, C, D) for operating switches ($S_A$, $S_B$, $S_C$, $S_D$) in the voltage regulator;

configuring the voltage regulator to be operated in (a) the peak-buck buck mode by the first control state, (b) the peak-buck buck-boost mode by the second control state, (c) the peak-boost buck-boost mode by the third control state and (d) the peak-boost boost mode by the fourth control state,

**characterised in that** the switch control signals (A, B, C, D) being generated according to a peak current-mode control scheme for generating the control signals (A, B, C, D) for operating the switches ($S_A$, $S_B$, $S_C$, $S_D$), the method comprising:

(i) detecting a peak in a current of an inductor in the voltage regulator when a voltage difference, representing the current of the inductor, reaches a variable voltage threshold; and

(ii) applying the timing of the first, second and third clock signals.

10. The method of claim 9, wherein selecting the control state further comprising transitioning between control states which incorporates hysteresis for transitioning between the first and second control states, or for transitioning between the third and fourth control states, and optionally

wherein the method further comprising providing the output voltage ($V_{OUT}$) as a scaled feedback signal ($V_{FB}$) for input to the peak-buck peak-boost control circuit.

11. The method of claim 9 or 10, wherein the voltage regulator (500, 600) comprises an inductor (L) and wherein generating the switch control signals (A, B, C, D) includes using a ramping voltage signal ($V_{SLP}$) and determining a peak value in a current flowing in the inductor, and optionally

wherein the ramping voltage signal comprises a segment which is linear in time, and

wherein the method further comprising determining the current flowing in the inductor from a voltage across a sense resistor (Rs) which is configured in series to the inductor.

12. The method of claim 11, wherein generating the switch control signals (A, B, C, D) comprising determining an occurrence of the peak value using the ramping voltage ($V_{SLP}$), the inductor current ($I_L$), and an error signal ($V_C$) derived from the output voltage ($V_{OUT}$); and optionally

wherein the method further comprising determining switching in switches (Sc, $S_D$) in an output side of the voltage regulator (500, 600) by the occurrence of the peak value; and wherein optionally

the method further comprising, when in either the third control state or the fourth control state, in response to the occurrence of the peak value, closing a switch ($S_D$) that connects the inductor from an output terminal of the voltage regulator and opening a switch that connects the inductor to a ground reference ($S_C$).

13. The method of claim 12 further comprising, in the third control state, at one of the predetermined switching period delays marked by the second or third clock signal (CLK_B, CLK_C), following the occurrence of the peak value, opening a switch ($S_A$) that connects the inductor from an input terminal of the voltage regulator (500, 600) and closing a switch ($S_B$) that connects the inductor to a ground reference.

14. The method of claim 12, wherein the error signal ($V_C$) is an amplified difference between a reference voltage ($V_{REF}$) and the output voltage ($V_{OUT}$), and wherein optionally

the method further comprises compensating for loop stability in the voltage regulator (500, 600) using the error signal.

15. The method of claim 12 to 14, wherein generating the switch control signals (A, B, C, D) comprises deriving an error signal ($V_C$) from the output voltage ($V_{OUT}$) and determining an occurrence of the peak current using the ramping voltage ($V_{SLP}$), the inductor current ($I_L$), an offset voltage ($V_{OS}$) and the error signal;

wherein the offset voltage is provided as a voltage difference between the ramping voltage at the predetermined switching period delay of the third clock signal (CLK_C) and the second clock signal (CLK_B) and wherein the peak value is determined when the voltage difference representing the current of the inductor is equal to the difference of the error signal and the ramping voltage plus the offset voltage; and optionally

wherein the method further comprising deriving the offset voltage from a difference in voltage at two time points of the ramping voltage, and

wherein the two time points are specific time points within a switching cycle of the control method.

16. The method circuit of claim 15, wherein the occurrence of the peak current controls switching in switches ($S_A$, $S_B$) in an input side of the voltage regulator (500, 600).

17. The method of claim 16 further comprising, when in either the first control state or the second control state, in response to the occurrence of the peak value, opening a switch ($S_A$) that connects the inductor from an input terminal of the voltage regulator (500, 600) and closing a switch ($S_B$) that connects the inductor to a ground reference; and wherein optionally the method further comprises, in the second control state, at one of the predetermined switching period delays marked by the second or third clock signal (CLK_B, CLK_C), the switch control signal generation circuit closing a switch ($S_D$) that connects the inductor from an output terminal of the voltage regulator and opening a switch (Sc) that connects the inductor to a ground reference.

**Patentansprüche**

1. Eine *Peak-Buck Peak-Boost* Steuerschaltung (501, 601, 700), die dazu ausgelegt ist, in einem Spannungsregler (500, 600) angeordnet zu werden, wobei die *Peak-Buck Peak-Boost* Steuerschaltung dazu ausgelegt ist, auszuwählen, in welchem der folgenden Modi der Spannungsregler arbeiten sollte: in einem *Peak-Buck Buck* Modus, in einem *Peak-Buck Buck-Boost* Modus, in einem *Peak-Boost Buck-Boost* Modus und oder einem *Peak-Boost Boost* Modus, wobei der Spannungsregler dazu ausgelegt ist, eine Eingangsspannung ($V_{IN}$) zu empfangen, und dazu ausgelegt ist, eine Ausgangsspannung ($V_{OUT}$) bereitzustellen, wobei die *Peak-Buck Peak-Boost* Steuerschaltung Folgendes umfasst:

eine Modus-Auswahlschaltung (720), die dazu ausgelegt ist, Steuersignale (ON_BST, PK_BUK, PK_BST, ON_BUK) zu erzeugen, die Folgendes darstellen: (a) einen ersten Steuerzustand, in dem die Eingangsspannung um mindestens einen ersten vorbestimmten Wert größer ist als die Ausgangsspannung; (b) einen zweiten Steuerzustand, in dem die Eingangsspannung größer als die Ausgangsspannung und kleiner oder gleich dem ersten vorbestimmten Wert ist; (c) einen dritten Steuerzustand, in dem die Ausgangsspannung größer als die Eingangsspannung und kleiner oder gleich einem zweiten vorbestimmten Wert ist; (d) einen vierten Steuerzustand, in dem die Ausgangsspannung um mindestens den zweiten vorbestimmten Wert größer als die Eingangsspannung ist; und eine Schaltersteuersignal-Erzeugungsschaltung zum Erzeugen von Steuersignalen (A, B, C, D) zum Betätigen von Schaltern ($S_A$, $S_B$, $S_C$, $S_D$) im Spannungsregler, wobei der Spannungsregler dazu konfiguriert ist, in den folgenden Modi betrieben zu werden: (a) im *Peak-Buck Buck* Modus durch den ersten Steuerzustand, (b) im *Peak-Buck Buck-Boost* Modus durch den zweiten Steuerzustand, (c) im *Peak-Boost Buck-Boost* Modus durch den dritten Steuerzustand und (d) im *Peak-Boost Boost* Modus durch den vierten Steuerzustand;

**dadurch gekennzeichnet, dass** die *Peak-Buck Peak-Boost* Steuerschaltung dazu ausgelegt ist, ein erstes Taktsignal (CLK_A), ein zweites Taktsignal (CLK_B) und ein drittes Taktsignal (CLK_C) zu empfangen, wobei das erste Taktsignal den Beginn einer Schaltperiode markiert und das zweite und dritte Taktsignal jeweils vorbestimmte Schaltperioden-Verzögerungen markieren,

und wobei die *Peak-Buck Peak-Boost* Steuerschaltung dazu ausgelegt ist, ein Spitzenstrom-Steuerschema zum Erzeugen der Steuersignale (A, B, C, D) zur Betätigung der Schalter ($S_A$, $S_B$, $S_C$, $S_D$) auf der Grundlage einer Konfiguration zu implementieren, um Folgendes zu bewerkstelligen:

(i) Erfassen eines Spitzenwertes in einem Strom ($I_L$) einer Induktivität (L) im Spannungsregler, wenn eine Spannungsdifferenz, die den Strom der Induktivität darstellt, eine variable Spannungsschwelle erreicht; und
(ii) Anwenden des Timings der Taktsignale eins, zwei und drei.

2. Die *Peak-Buck Peak-Boost* Steuerschaltung (501, 601, 700) nach Anspruch 1, wobei die Modus-Auswahlschaltung (720) dazu ausgelegt ist, eine Hysterese auf einen Übergang zwischen dem ersten und zweiten Steuerzustand oder auf einen Übergang zwischen dem dritten und vierten Steuerzustand anzuwenden; und wobei die *Peak-Buck Peak-Boost* Steuerschaltung dazu ausgelegt ist, die Ausgangsspannung ($V_{OUT}$) als ein skaliertes Rückkopplungssignal ($V_{FB}$) zur Eingabe in die *Peak-Buck Peak-Boost* Steuerschaltung bereitzustellen.

3. Die *Peak-Buck Peak-Boost* Steuerschaltung (501, 601, 700) nach Anspruch 2, wobei die Schaltsteuersignal-Erzeugungsschaltung Folgendes enthält: einen Signalgenerator (710), der dafür ausgelegt ist, ein Rampenspannungssignal ($V_{SLP}$) bereitzustellen, und einen Strommessverstärker (702), der dazu ausgelegt ist, einen Spitzenwert in einem in der Induktivität fließenden Strom zu bestimmen, und gegebenenfalls wobei das Rampenspannungssignal ein Segment umfasst, das zeitlich linear ist; und wobei die *Peak-Buck Peak-Boost* Steuerschaltung so ausgelegt ist, dass sie den in der Induktivität (L) fließenden Strom aus einer Spannung über einen Messwiderstand (Rs) bestimmt, der in Reihe mit der Induktivität konfiguriert ist.

4. Die *Peak-Buck Peak-Boost* Steuerschaltung (501, 601, 700) nach Anspruch 3, wobei die Schaltsteuersignal-Erzeugungsschaltung einen ersten Komparator (706) aufweist, der dazu ausgelegt ist, ein Auftreten des Spitzenwerts unter Verwendung der Rampenspannung ($V_{SLP}$), des Induktorstroms ($I_L$) und eines von der Ausgangsspannung ($V_{OUT}$) abgeleiteten Fehlersignals (Vc) zu bestimmen, wobei der Spitzenwert bestimmt wird, wenn die den Strom des Induktors darstellende Spannungsdifferenz gleich der Differenz aus Fehlersignal und Rampenspannung ist, und gegebenenfalls

wobei der erste Komparator dazu ausgelegt ist, Schalter (Sc, $S_D$) an einer Ausgangsseite des Spannungsreglers (500, 600) zu steuern.

5. Die *Peak-Buck Peak-Boost* Steuerschaltung (501, 601, 700) nach Anspruch 4, die ferner so angepasst ist, wenn sie sich entweder im dritten Steuerzustand oder im vierten Steuerzustand befindet, als Reaktion auf das Auftreten des Spitzenwertes, dass die Schaltersteuersignal-Erzeugungsschaltung einen Schalter ($S_D$) schließt, der die Induktivität von einem Ausgangsanschluss des Spannungsreglers (500, 600) verbindet, und einen Schalter (Sc) öffnet, der die Induktivität mit einer Masse-Referenz verbindet; und gegebenenfalls

wobei die *Peak-Buck Peak-Boost* Steuerschaltung ferner im dritten Steuerzustand bei einer der vorbestimmten Schaltperiodenverzögerungen, die durch das zweite oder dritte Taktsignal (CLK_B, CLK_C) markiert sind, nach dem Auftreten des Spitzenwertes so angepasst ist, dass die Schaltersteuersignal-Erzeugungsschaltung einen Schalter ($S_A$) öffnet, der die Induktivität von einem Eingangsanschluss des Spannungsreglers verbindet, und einen Schalter ($S_B$) schließt, der die Induktivität mit einer Masse-Referenz verbindet.

6. Die *Peak-Buck Peak-Boost* Steuerschaltung (501, 601, 700) nach Anspruch 4 oder 5, wobei das Fehlersignal (Vc) eine verstärkte Differenz zwischen einer Referenzspannung und der Ausgangsspannung ($V_{OUT}$) ist, und gegebenenfalls wobei die *Peak-Buck Peak-Boost* Steuerschaltung ferner eine Kompensationsschaltung (711) umfasst, die zum Empfangen des Fehlersignals ausgelegt ist, um Schleifenstabilität (*loop stability*) im Spannungsregler (500, 600) bereitzustellen.

7. Die *Peak-Buck Peak-Boost* Steuerschaltung (501, 601, 700) nach Anspruch 3, wobei die Schaltsteuersignal-Erzeugungsschaltung einen zweiten Komparator (705) umfasst, der dazu ausgelegt ist, das Auftreten des Spitzenstroms unter Verwendung der Rampenspannung ($V_{SLP}$), des Induktivitätsstroms ($I_L$), einer Offset-Spannung (Vos) und eines von der Ausgangsspannung ($V_{OUT}$) abgeleiteten Fehlersignals (Vc) zu bestimmen,

wobei die Offset-Spannung bereitgestellt wird als Spannungsdifferenz zwischen der Rampenspannung bei der vorbestimmten Schaltperiodenverzögerung des dritten Taktsignals (CLK_C) und des zweiten Taktsignals (CLK_B) und wobei der Spitzenwert bestimmt wird, wenn die den Strom der Induktivität darstellende Spannungsdifferenz gleich der Differenz des Fehlersignals und der Rampenspannung plus der Offset-Spannung ist, und gegebenenfalls

wobei die *Peak-Buck Peak-Boost* Steuerschaltung dazu ausgelegt ist, die Offset-Spannung aus einer Spannungsdifferenz zu zwei Zeitpunkten der Rampenspannung abzuleiten, und

wobei die beiden Zeitpunkte spezifische Zeitpunkte innerhalb eines Schaltzyklus der *Peak-Buck Peak-Boost* Steuerschaltung sind.

8. Die *Peak-Buck Peak-Boost* Steuerschaltung (501, 601, 700) nach Anspruch 7, wobei der Komparator (706) dazu ausgelegt ist, Schalter ($S_A$, $S_B$) in einer Eingangsseite des Spannungsreglers (500, 600) zu steuern, und gegebenenfalls

wobei die *Peak-Buck Peak-Boost* Steuerschaltung, wenn sie sich entweder in dem ersten Steuerzustand oder in dem zweiten Steuerzustand befindet, als Reaktion auf das Auftreten des Spitzenwertes so angepasst ist, dass die Schaltersteuersignal-Erzeugungsschaltung einen Schalter ($S_A$) öffnet, der den Induktor von einem Eingangsanschluss des Spannungsreglers verbindet, und einen Schalter ($S_B$) schließt, der den Induktor mit einer Masse-Referenz verbindet, und optional

wobei die *Peak-Buck Peak-Boost* Steuerschaltung im zweiten Steuerzustand bei einer der vorbestimmten Schaltperiodenverzögerungen, die durch das zweite oder dritte Taktsignal (CLK_B, CLK_C) markiert sind, so angepasst ist, dass die Schaltersteuersignal-Erzeugungsschaltung einen Schalter ($S_D$) schließt, der die Induktivität von einem Ausgangsanschluss des Spannungsreglers verbindet, und einen Schalter (Sc) öffnet, der die Induktivität mit einer Masse-Referenz verbindet.

9. Ein Verfahren, das von einer *Peak-Buck Peak-Boost* Steuerschaltung (501, 601, 700) ausgeführt wird, die dazu ausgelegt ist, in einem Spannungsregler (500, 600) angeordnet zu werden, wobei die *Peak-Buck Peak-Boost* Steuerschaltung dazu ausgelegt ist, auszuwählen, in welchem der folgenden Modi der Spannungsregler arbeiten sollte: in einem *Peak-Buck Buck* Modus, in einem *Peak-Buck Buck-Boost* Modus, in einem *Peak-Boost Buck-Boost* Modus und oder einem *Peak-Boost Boost* Modus, wobei der Spannungsregler dazu ausgelegt ist, eine Eingangsspannung ($V_{IN}$) zu empfangen und eine Ausgangsspannung (VOUT) bereitzustellen, wobei das Verfahren zur Steuerung des Spannungsreglers Folgendes umfasst:

Empfangen eines ersten Taktsignals (CLK_A), eines zweiten Taktsignals (CLK_B) und eines dritten Taktsignals (CLK_C) in der *Peak-Buck Peak-Boost* Steuerschaltung, wobei das erste Taktsignal den Beginn einer Schaltperiode markiert und das zweite und dritte Taktsignal jeweilige Schaltperiodenverzögerungen markieren;

Auswählen eines Steuerzustands (ON_BST, PK_BUK, PK_BST, ON_BUK), wobei das Auswählen das Bestimmen (a) eines ersten Steuerzustands, in dem die Eingangsspannung um mindestens einen ersten vorbestimmten Wert größer ist als die Ausgangsspannung; (b) eines zweiten Steuerzustands, in dem die Eingangsspannung größer als die Ausgangsspannung und kleiner oder gleich dem ersten vorbestimmten Wert ist; (c) eines dritten Steuerzustands, in dem die Ausgangsspannung größer als die Eingangsspannung und kleiner oder gleich einem zweiten vorbestimmten Wert ist; (d) eines vierten Steuerzustands, in dem die Ausgangsspannung um mindestens den zweiten vorbestimmten Wert größer als die Eingangsspannung ist, umfasst;

Erzeugen von Schaltersteuersignalen (A, B, C, D) zur Betätigung von Schaltern ($S_A$, $S_B$, $S_C$, $S_D$) im Spannungsregler;

Konfigurieren des Spannungsreglers zum Betrieb: (a) im *Peak-Buck Buck* Modus durch den ersten Steuerzustand, (b) im *Peak-Buck Buck-Boost* Modus durch den zweiten Steuerzustand, (c) im *Peak-Boost Buck-Boost* Modus durch den dritten Steuerzustand und (d) im *Peak-Boost Boost* Modus durch den vierten Steuerzustand; **dadurch gekennzeichnet, dass** die Schaltersteuersignale (A, B, C, D) gemäß einem Spitzenstrom-Steuerschema zum Erzeugen der Steuersignale (A, B, C, D) zur Betätigung der Schalter ($S_A$, $S_B$, $S_C$, $S_D$) erzeugt werden, wobei das Verfahren Folgendes umfasst:

(i) Erfassen eines Spitzenwertes in einem Strom einer Induktivität im Spannungsregler, wenn eine Spannungsdifferenz, die den Strom der Induktivität darstellt, eine variable Spannungsschwelle erreicht; und
(ii) Anwenden des Timings der Taktsignale eins, zwei und drei.

10. Das Verfahren nach Anspruch 9, wobei das Auswählen des Steuerzustandes ferner einen Übergang zwischen Steuerzuständen umfasst, der eine Hysterese enthält für den Übergang zwischen dem ersten und zweiten Steuerzustand oder für den Übergang zwischen dem dritten und vierten Steuerzustand, und gegebenenfalls

wobei das Verfahren ferner das Bereitstellen der Ausgangsspannung ($V_{OUT}$) als skaliertes Rückkopplungssignal ($V_{FB}$) zur Eingabe in die *Peak-Buck Peak-Boost* Steuerschaltung umfasst.

11. Das Verfahren nach Anspruch 9 oder 10, wobei der Spannungsregler (500, 600) eine Induktivität (L) umfasst und wobei das Erzeugen der Schaltsteuersignale (A, B, C, D) das Verwenden eines Rampenspannungssignals ($V_{SLP}$) und das Bestimmen eines Spitzenwertes in einem in der Induktivität fließenden Strom umfasst, und optional

wobei das Rampenspannungssignal ein Segment umfasst, das zeitlich linear ist, und

wobei das Verfahren ferner das Bestimmen des in der Induktivität fließenden Stroms aus einer Spannung über einen Messwiderstand (Rs) umfasst, der bezüglich der Induktivität in Reihe geschaltet konfiguriert ist.

12. Das Verfahren nach Anspruch 11, wobei das Erzeugen der Schaltersteuersignale (A, B, C, D) das Bestimmen eines Auftretens des Spitzenwertes umfasst unter Verwendung der Rampenspannung ($V_{SLP}$), des Induktorstroms ($I_L$) und eines von der Ausgangsspannung ($V_{OUT}$) abgeleiteten Fehlersignals (Vc); und optional

wobei das Verfahren ferner das Bestimmen des Einschaltens von Schaltern ($S_C$, $S_D$) auf einer Ausgangsseite des Spannungsreglers (500, 600) durch das Auftreten des Spitzenwertes umfasst; und wobei optional

das Verfahren ferner Folgendes umfasst: wenn entweder im dritten Steuerzustand oder im vierten Steuerzustand, als Reaktion auf das Auftreten des Spitzenwertes, Schließen eines Schalters ($S_D$), der die Induktivität von einem Ausgangsanschluss des Spannungsreglers verbindet, und Öffnen eines Schalters, der die Induktivität mit einer Masse-Referenz (Sc) verbindet.

13. Das Verfahren nach Anspruch 12, das ferner Folgendes umfasst: im dritten Steuerzustand, bei einer der vorbestimmten Schaltperiodenverzögerungen, die durch das zweite oder dritte Taktsignal (CLK_B, CLK_C) markiert sind, nach dem Auftreten des Spitzenwertes, Öffnen eines Schalters ($S_A$), der die Induktivität von einem Eingangsanschluss des Spannungsreglers (500, 600) verbindet, und Schließen eines Schalters ($S_B$), der die Induktivität mit einer Masse-Referenz verbindet.

14. Das Verfahren nach Anspruch 12, wobei das Fehlersignal (Vc) eine verstärkte Differenz zwischen einer Referenzspannung ($V_{REF}$) und der Ausgangs-

23 **EP 3 002 860 B1** 24

spannung (V$_{OUT}$) ist, und wobei optional das Verfahren ferner Folgendes umfasst: Kompensieren der Schleifenstabilität (*loop stability*) im Spannungsregler (500, 600) unter Verwendung des Fehlersignals.

15. Das Verfahren nach den Ansprüchen 12 bis 14, wobei das Erzeugen der Schaltersteuersignale (A, B, C, D) Folgendes umfasst: das Ableiten eines Fehlersignals (Vc) aus der Ausgangsspannung (V$_{OUT}$) und das Bestimmen eines Auftretens des Spitzenstroms unter Verwendung der Rampenspannung (V$_{SLP}$), des Induktorstroms (I$_L$), einer Offset-Spannung (Vos) und des Fehlersignals; wobei die Offset-Spannung bereitgestellt wird als eine Spannungsdifferenz zwischen der Rampenspannung bei der vorbestimmten Schaltperiodenverzögerung des dritten Taktsignals (CLK_C) und des zweiten Taktsignals (CLK_B) und wobei der Spitzenwert bestimmt wird, wenn die Spannungsdifferenz, die den Strom der Induktivität darstellt, gleich der Differenz aus dem Fehlersignal und der Rampenspannung plus der Offset-Spannung ist; und optional wobei das Verfahren ferner das Ableiten der Offset-Spannung aus einer Spannungsdifferenz zu zwei Zeitpunkten der Rampenspannung umfasst, und wobei die beiden Zeitpunkte spezifische Zeitpunkte innerhalb eines Schaltzyklus des Steuerungsverfahrens sind.

16. Die Verfahrensschaltung nach Anspruch 15, wobei das Auftreten des Spitzenstroms das Einschalten von Schaltern (S$_A$, S$_B$) in einer Eingangsseite des Spannungsreglers (500, 600) steuert.

17. Das Verfahren nach Anspruch 16, das ferner Folgendes umfasst: wenn entweder im ersten Steuerzustand oder im zweiten Steuerzustand, als Reaktion auf das Auftreten des Spitzenwertes, Öffnen eines Schalters (S$_A$), der die Induktivität von einem Eingangsanschluss des Spannungsreglers (500, 600) aus verbindet, und Schließen eines Schalters (S$_B$), der die Induktivität mit einer Masse-Referenz verbindet; und wobei optional wobei das Verfahren ferner Folgendes umfasst: im zweiten Steuerzustand, bei einer der vorbestimmten Schaltperiodenverzögerungen, die durch das zweite oder dritte Taktsignal (CLK_B, CLK_C) markiert sind, Schließen, durch die Schaltersteuersignal-Erzeugungsschaltung, eines Schalters (S$_D$), der die Induktivität von einem Ausgangsanschluss des Spannungsreglers verbindet, und Öffnen eines Schalters (Sc), der die Induktivität mit einer Masse-Referenz verbindet.

## Revendications

1. Un circuit de commande *peak-buck peak-boost* (501, 601, 700) adapté pour être placé dans un régulateur de tension (500, 600), le circuit de commande de *peak-buck peak-boost* étant adapté pour sélectionner un parmi un mode *peak-buck buck,* un mode *peak-buck buck-boost,* un mode *peak-boost buck-boost* et un mode *peak-boost boost,* dans lequel le régulateur de tension doit fonctionner, le régulateur de tension étant adapté pour recevoir une tension d'entrée (V$_{IN}$) et étant adapté pour fournir une tension de sortie (V$_{OUT}$), le circuit de commande *peak-buck peak-boost* comprenant :

un circuit de sélection de mode (720) adapté pour générer des signaux de commande (ON_BST, PK_BUK, PK_BST, ON_BUK) représentant (a) un premier état de commande dans lequel la tension d'entrée est supérieure à la tension de sortie d'au moins une première valeur prédéterminée ; (b) un deuxième état de commande dans lequel la tension d'entrée est supérieure à la tension de sortie et inférieure ou égale à la première valeur prédéterminée ; (c) un troisième état de commande dans lequel la tension de sortie est supérieure à la tension d'entrée et inférieure ou égale à une deuxième valeur prédéterminée ; (d) un quatrième état de commande dans lequel la tension de sortie est supérieure à la tension d'entrée d'au moins la deuxième valeur prédéterminée ; et un circuit de génération de signaux de commande de commutateur pour générer des signaux de commande (A, B, C, D) pour actionner des commutateurs (S$_A$, S$_B$, S$_C$, S$_D$) dans le régulateur de tension, sachant que le régulateur de tension est configuré pour être exploité dans (a) le mode *peak-buck buck* par le premier état de commande ; (b) le mode *peak-buck buck-boost* par le deuxième état de commande, (c) le mode *peak-boost buck-boost* par le troisième état de commande et (d) le mode *peak-boost boost* par le quatrième état de commande ;

**caractérisé en ce que** le circuit de commande *peak-buck peak-boost* est adapté pour recevoir un premier signal d'horloge (CLK_A), un deuxième signal d'horloge (CLK_B) et un troisième signal d'horloge (CLK_C), sachant que le premier signal d'horloge marque le début d'une période de commutation et que les signaux d'horloge deuxième et troisième marquent des retards de période de commutation prédéterminés respectifs,

et sachant que le circuit de commande *peak-buck peak-boost* est adapté pour mettre en œuvre un schéma de commande en mode de courant de crête pour générer les signaux de commande (A, B, C, D) pour faire fonctionner les commutateurs ($S_A$, $S_B$, $S_C$, $S_D$) sur la base d'une configuration pour

(i) détecter une crête dans le courant ($I_L$) d'une inductance (L) dans le régulateur de tension lorsqu'une différence de tension, représentant le courant de inducteur, atteint un seuil de tension variable ; et pour

(ii) appliquer la temporisation des signaux d'horloge premier, deuxième et troisième.

2. Le circuit de commande *peak-buck peak-boost* (501, 601, 700) d'après la revendication 1,
sachant que le circuit de sélection de mode (720) est adapté pour appliquer une hystérésis à une transition entre les états de commande premier et deuxième, ou à une transition entre les états de commande troisième et quatrième ; et
sachant que le circuit de commande *peak-buck peak-boost* est adapté pour fournir la tension de sortie ($V_{OUT}$) sous la forme d'un signal de rétroaction mis à l'échelle ($V_{FB}$) à entrer dans le circuit de commande *peak-buck peak-boost.*

3. Le circuit de commande *peak-buck peak-boost* (501, 601, 700) d'après la revendication 2, sachant que le circuit de génération de signal de commande de commutateur comprend un générateur de signal (710) qui est adapté pour fournir un signal de tension en rampe ($V_{SLP}$) et un amplificateur de détection de courant (702) qui est adapté pour déterminer une valeur de crête dans un courant circulant dans l'inducteur, et facultativement
sachant que le signal de tension en rampe comprend un segment qui est linéaire dans le temps ; et
sachant que le circuit de commande *peak-buck peak-boost* est adapté pour déterminer le courant circulant dans l'inducteur (L) à partir d'une tension aux bornes d'une résistance de détection (Rs) qui est configurée en série avec l'inducteur.

4. Le circuit de commande *peak-buck peak-boost* (501, 601, 700) d'après la revendication 3, sachant que le circuit de génération de signal de commande de commutateur comprend un premier comparateur (706) qui est adapté pour déterminer une occurrence de la valeur de crête en utilisant la tension en rampe ($V_{SLP}$), le courant de l'inducteur ($I_L$) et un signal d'erreur (Vc) dérivé de la tension de sortie ($V_{OUT}$), sachant que la valeur de crête est déterminée lorsque la différence de tension représentant le courant de l'inducteur est égale à la différence du signal d'erreur et de la tension en rampe ; et facultativement
sachant que le premier comparateur est adapté pour commander des commutateurs ($S_C$, $S_D$) sur un côté de sortie du régulateur de tension (500, 600).

5. Le circuit de commande *peak-buck peak-boost* (501, 601, 700) d'après la revendication 4, adapté en outre, lorsqu'il est dans le troisième état de commande ou le quatrième état de commande, en réponse à l'occurrence de la valeur de crête, pour que le circuit de génération de signal de commande de commutateur, ferme un commutateur ($S_D$) reliant l'inductance à une borne de sortie du régulateur de tension (500, 600) et ouvre un commutateur (Sc) reliant l'inductance à une référence de masse ; et facultativement
sachant que le circuit de commande *peak-buck peak-boost* est en outre adapté, dans le troisième état de commande, à l'un des retards prédéterminés de la période de commutation marqué par le deuxième ou le troisième signal d'horloge (CLK_B, CLK_C), après l'occurrence de la valeur de crête, pour que le circuit de génération de signal de commande de commutateur ouvre un commutateur ($S_A$) connectant l'inductance à partir d'une borne d'entrée du régulateur de tension, et ferme un commutateur ($S_B$) connectant l'inductance à une référence de masse.

6. Le circuit de commande *peak-buck peak-boost* (501, 601, 700) d'après la revendication 4 ou 5, sachant que le signal d'erreur (Vc) est une différence amplifiée entre une tension de référence et la tension de sortie ($V_{OUT}$), et que facultativement
le circuit de commande *peak-buck peak-boost* comprend en outre un circuit de compensation (711) adapté pour recevoir le signal d'erreur afin d'assurer la stabilité de la boucle dans le régulateur de tension (500, 600).

7. Le circuit de commande *peak-buck peak-boost* (501, 601, 700) d'après la revendication 3, sachant que le circuit de génération de signal de commande de commutateur comprend un deuxième comparateur (705) qui est adapté pour déterminer une occurrence du courant de crête en utilisant la tension en rampe ($V_{SLP}$), le courant d'inducteur ($I_L$), une tension de décalage (Vos) et un signal d'erreur (Vc) dérivé de la tension de sortie ($V_{OUT}$),
sachant que la tension de décalage est fournie sous la forme d'une différence de tension entre la tension en rampe au retard de la période de commutation prédéterminée du troisième signal d'horloge (CLK_C) et du deuxième signal d'horloge (CLK_B), et sachant que la valeur de crête est déterminée lorsque la différence de tension représentant le courant de l'inducteur est égale à la différence du signal d'erreur et de la tension en rampe plus la tension de décalage ; et facultativement
sachant que le circuit de commande *peak-buck peak-boost* est adapté pour dériver la tension de décalage à partir d'une différence de tension à deux points temporels de la tension en rampe, et

sachant que les deux points temporels sont des points temporels spécifiques à l'intérieur d'un cycle de commutation du circuit de commande *peak-buck peak-boost.*

8. Le circuit de commande *peak-buck peak-boost* (501, 601, 700) d'après la revendication 7,
sachant que le comparateur (706) est adapté pour commander des commutateurs ($S_A$, $S_B$) dans un côté d'entrée du régulateur de tension (500, 600), et facultativement
sachant que le circuit de commande *peak-buck peak-boost* est adapté, lorsqu'il est dans le premier état de commande ou dans le deuxième état de commande, en réponse à l'occurrence de la valeur de crête pour que circuit de génération de signal de commande de commutateur ouvre un commutateur ($S_A$) connectant l'inductance à partir d'une borne d'entrée du régulateur de tension, et ferme un commutateur ($S_B$) connectant l'inductance à une référence de masse, et facultativement
sachant que le circuit de commande *peak-buck peak-boost* est adapté, dans le deuxième état de commande, à l'un des retards de la période de commutation prédéterminée marqué par le deuxième ou le troisième signal d'horloge (CLK_B, CLK_C), pour que le circuit de génération du signal de commande de commutateur ferme un commutateur ($S_D$) connectant l'inductance à partir d'une borne de sortie du régulateur de tension, et ouvre un commutateur (Sc) connectant l'inductance à une référence de masse.

9. Un procédé réalisé par un circuit de commande *peak-buck peak-boost* (501, 601, 700) adapté pour être placé dans un régulateur de tension (500, 600), le circuit de commande *peak-buck peak-boost* étant adapté pour sélectionner un parmi un mode de fonctionnement *peak-buck buck,* un mode *peak buck buck-boost,* un mode *buck-boost peak-boost* et un mode *peak-boost boost* dans lequel le régulateur de tension doit fonctionner, le régulateur de tension étant adapté pour recevoir une tension d'entrée ($V_{IN}$) et pour fournir une tension de sortie ($V_{OUT}$), le procédé de commande du régulateur de tension comprenant le fait de :

recevoir un premier signal d'horloge (CLK_A), un deuxième signal d'horloge (CLK_B) et un troisième signal d'horloge (CLK_C) dans le circuit de commande *peak-buck peak-boost,* sachant que le premier signal d'horloge marque le début d'une période de commutation et que les signaux d'horloge deuxième et troisième marquent les retards respectifs de la période de commutation ;
sélectionner un état de commande (ON_BST, PK_BUK, PK_BST, ON_BUK), sachant que le fait de sélectionner comprend le fait de déterminer (a) un premier état de commande dans lequel la tension d'entrée est supérieure à la tension de sortie d'au moins une première valeur prédéterminée ; (b) un deuxième état de commande dans lequel la tension d'entrée est supérieure à la tension de sortie et inférieure ou égale à la première valeur prédéterminée ; (c) un troisième état de commande dans lequel la tension de sortie est supérieure à la tension d'entrée et inférieure ou égale à une deuxième valeur prédéterminée ; (d) un quatrième état de commande dans lequel la tension de sortie est supérieure à la tension d'entrée d'au moins la deuxième valeur prédéterminée ;
générer des signaux de commande de commutateur (A, B, C, D) pour le fonctionnement des commutateurs ($S_A$, $S_B$, $S_C$, $S_D$) dans le régulateur de tension ;
configurer le régulateur de tension pour qu'il fonctionne (a) en mode *peak-buck buck* dans le premier état de commande, (b) en mode *peak-buck buck-boost* dans le deuxième état de commande, (c) en mode *peak-boost buck-boost* dans le troisième état de commande et (d) en mode *peak-boost boost* dans le quatrième état de commande,
**caractérisé en ce que** les signaux de commande de commutateur (A, B, C, D) sont générés conformément à un schéma de commande en mode de courant de crête pour générer les signaux de commande (A, B, C, D) pour le fonctionnement des commutateurs ($S_A$, $S_B$, $S_C$, $S_D$), le procédé comprenant le fait de :

(i) détecter une crête dans le courant d'un inducteur dans le régulateur de tension lorsqu'une différence de tension, représentant le courant de l'inducteur, atteint un seuil de tension variable ; et de
(ii) appliquer la temporisation des signaux d'horloge premier, deuxième et troisième.

10. Le procédé d'après la revendication 9, sachant que le fait de sélectionner l'état de commande comprend en outre le fait de faire la transition entre des états de commande ce qui comporte une hystérésis pour faire la transition entre les états de commande premier et deuxième, ou pour faire la transition entre les états de commande troisième et quatrième, et facultativement
sachant que le procédé comprend en outre le fait de fournir la tension de sortie ($V_{OUT}$) sous la forme d'un signal de rétroaction mis à l'échelle ($V_{FB}$) pour l'entrée dans le circuit de commande *peak-buck peak-boost.*

11. Le procédé d'après la revendication 9 ou 10, sachant que le régulateur de tension (500, 600) comprend une inductance (L) et sachant que le fait de générer les signaux de commande de commutateur (A, B, C, D) comprend l'utilisation d'un signal de tension en rampe ($V_{SLP}$) et la détermination d'une valeur de crête dans un courant circulant dans l'inductance, et facultativement

sachant que le signal de tension en rampe comprend un segment qui est linéaire dans le temps, et

sachant que le procédé comprend en outre le fait de déterminer le courant circulant dans l'inducteur à partir d'une tension aux bornes d'une résistance de détection (Rs) qui est configurée en série avec l'inducteur.

12. Le procédé d'après la revendication 11, sachant que le fait de générer les signaux de commande de commutateur (A, B, C, D) comprend le fait de déterminer une occurrence de la valeur de crête en utilisant la tension en rampe ($V_{SLP}$), le courant d'inducteur ($I_L$) et un signal d'erreur (Vc) dérivé de la tension de sortie ($V_{OUT}$) ; et facultativement

sachant que le procédé comprend en outre le fait de déterminer la commutation des commutateurs ($S_C$, $S_D$) dans un côté de sortie du régulateur de tension (500, 600) par l'occurrence de la valeur de crête ; et sachant que, facultativement

le procédé comprend en outre, lorsqu'il est dans le troisième ou le quatrième état de commande, en réponse à l'occurrence de la valeur de crête, le fait de fermer un commutateur ($S_D$) qui connecte l'inducteur à une borne de sortie du régulateur de tension et le fait d'ouvrir un commutateur qui connecte l'inducteur à une référence de masse ($S_C$).

13. Le procédé d'après la revendication 12, comprenant en outre, dans le troisième état de commande, à l'un des retards de la période de commutation prédéterminée marqué par le deuxième ou le troisième signal d'horloge (CLK_B, CLK_C), en réponse à l'occurrence de la valeur de crête, le fait d'ouvrir un commutateur ($S_A$) qui connecte l'inducteur à partir d'une borne d'entrée du régulateur de tension (500, 600) et le fait de fermer un commutateur ($S_B$) qui connecte l'inducteur à une référence de masse.

14. Le procédé d'après la revendication 12, sachant que le signal d'erreur (Vc) est une différence amplifiée entre une tension de référence ($V_{REF}$) et la tension de sortie ($V_{OUT}$), et sachant que, facultativement le procédé comprend en outre le fait de compenser la stabilité de la boucle dans le régulateur de tension (500, 600) en utilisant le signal d'erreur.

15. Le procédé d'après les revendications de 12 à 14, sachant que le fait de générer les signaux de commande de commutateur (A, B, C, D) comprend le fait de dériver un signal d'erreur (Vc) à partir de la tension de sortie ($V_{OUT}$) et le fait de déterminer une occurrence du courant de crête en utilisant la tension en rampe ($V_{SLP}$), le courant d'inducteur ($I_L$), une tension de décalage (Vos) et le signal d'erreur ;

sachant que la tension de décalage est fournie sous la forme d'une différence de tension entre la tension en rampe au retard de la période de commutation prédéterminée du troisième signal d'horloge (CLK_C) et du deuxième signal d'horloge (CLK_B) et sachant que la valeur de crête est déterminée lorsque la différence de tension représentant le courant de l'inducteur est égale à la différence entre le signal d'erreur et la tension en rampe plus la tension de décalage ; et, facultativement

sachant que le procédé comprend en outre la dérivation de la tension de décalage à partir d'une différence de tension à deux points temporels de la tension en rampe, et

sachant que les deux points temporels sont des points temporels spécifiques à l'intérieur d'un cycle de commutation du procédé de commande.

16. Le circuit de procédé d'après la revendication 15, sachant que l'occurrence du courant de crête commande la commutation de commutateurs ($S_A$, $S_B$) dans un côté d'entrée du régulateur de tension (500, 600).

17. Le procédé d'après la revendication 16, comprenant en outre, dans le premier état de commande ou dans le deuxième état de commande, en réponse à l'occurrence de la valeur de crête, le fait d'ouvrir un commutateur ($S_A$) qui connecte l'inductance à partir d'une borne d'entrée du régulateur de tension (500, 600) et le fait de fermer un commutateur ($S_B$) qui connecte l'inductance à une référence de masse ; et sachant que, facultativement

le procédé comprend en outre, dans le deuxième état de commande, à l'un des retards de période de commutation prédéterminés marqué par le deuxième ou le troisième signal d'horloge (CLK_B, CLK_C), le fait que le circuit de génération de signal de commande de commutateur ferme un commutateur ($S_D$) qui connecte l'inductance à partir d'une borne de sortie du régulateur de tension et ouvre un commutateur (Sc) qui connecte l'inductance à une référence de masse.

FIG. 1

FIG. 2

FIG. 3

FIG. 4

500

FIG. 5

FIG. 6

FIG. 7

EP 3 002 860 B1

MODE SELECTION

PEAK-BUCK BUCK

PEAK-BUCK BUCK-BOOST

PEAK-BOOST BUCK-BOOST

PEAK-BOOST BOOST

( I )

0.80  0.90  1.00  1.11  1.25

ON_BUK = 1

ON_BUK = 0

( II )

0.80  0.90  1.00  1.11  1.25

ON_BST = 1

ON_BST = 0

( III )

0.80  0.90  1.00  1.11  1.25

PK_BUK = 1

PK_BST = 1

( IV )

0.80  0.90  1.00  1.11  1.25

$V_{IN}/V_{OUT}$ RATIO

FIG. 8

23

OSCILLATOR WAVEFORMS

FIG. 9

FIG. 10

FIG. 11

PK_BUK BUCK ($V_{IN} > V_{OUT}$)

FIG. 12

FIG. 13

PK_BST BOOST (V$_{IN}$ < V$_{OUT}$)

CLK_A

CLK_B          90%                    90%

CLK_C    10%                    10%

A

B

C

D

V$_C$ − V$_{SLP}$            V$_C$ − V$_{SLP}$

I$_L$

A+C        A+D       A+C        A+D

FIG. 14

PK_BST BUCK-BOOST ($V_{IN} <\sim V_{OUT}$)

FIG. 15

PK_BUK BUCK-BOOST (V$_{IN}$ = V$_{OUT}$)

FIG. 16

PK_BST BUCK-BOOST ($V_{IN} = V_{OUT}$)

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6348779 B
- US 6087816 A, Volk
- US 6166527 A, Dwelley
- US 7116085 B, Ikezawa
- US 7256570 B, Zhou
- US 7298119 B, Amram Summit
- US 7394231 B, Flatness
- US 20110279098, Ren
- EP 1689070 A2
- US 2014084883 A1
- US 2012176824 A1
- US 2014354250 A1